# EUROPEAN PATENT APPLICATION

(11) **EP 3 199 986 A1**
(43) Date of publication of application: **02.08.2017**
(21) Application number: 15843505.7
(22) Date of filing: 23.09.2015
(51) Int. Cl.: G02B 5/04

(54) **OPTICAL IMAGE DETECTING APPARATUS**

(30) Priority: 24.09.2014 KR 20140127779
(71) Applicant: Koh Young Technology Inc., Seoul 153-706 (KR)
(72) Inventor: KIM, Hong Min, Seoul 120-120 (KR)
(74) Representative: Zardi, Marco
(86) International application number: PCT/KR2015/010027
(87) International publication number: WO 2016/048040

(57) **Abstract**

The optical image detecting apparatus according to one embodiment of the present invention may comprise a prism structure comprising a first right-angled prism and a second right-angled prism configured to be in contact with each other to form a first interface in order to transmit and reflect an image input from the outside, wherein the second right-angled prism may comprise at least two right-angled sub-prisms configured to be in contact with each other to form a second interface.

## Description

### TECHNICAL FIELD

The present invention relates to an optical image detecting apparatus using a prism, and more specifically, to an optical image detecting apparatus using a prism that includes a first interface having a transmittance of 50% and a reflectivity of 50% and a second interface having a reflectivity of 100%.

### BACKGROUND ART

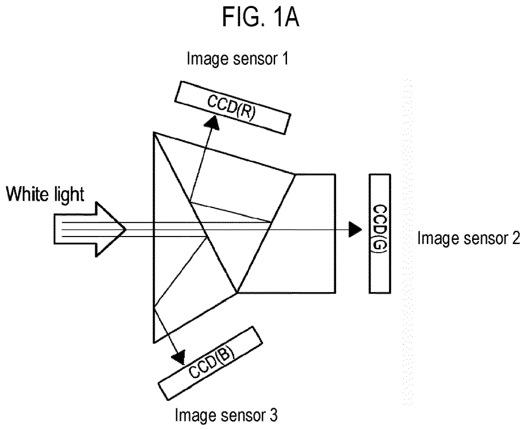

FIG. 1A is a schematic view illustrating a method in which 3CCD or 3CMOS type image sensors, according to a conventional technology, receive color images, respectively. Referring to FIG. 1A, a prism splits incident white light into red (R), green (G), and blue (B) light according to wavelengths and outputs the same. Each of the RGB light outputs is input to one of the plurality of images sensors. Specifically, as illustrated in FIG. 1A, a first face of the prism transmits two-thirds of the incident light, and a second face of the prism transmits one-half of the light passing through the first face.

In the conventional technology described above, receiving a large-area image using the plurality of image sensors may be implemented by splitting the entire light according to a particular ratio, rather than wavelengths, and shifting the locations of the image sensors.

However, the method in the conventional technology has a problem in that the intensity of the light input to each image sensor is reduced to one-third of the intensity of the original input image, resulting in a considerable decrease in the brightness, and the images input to the respective image sensors should include an overlapped portion with each other in order to combine the three images separated from each other into one image.

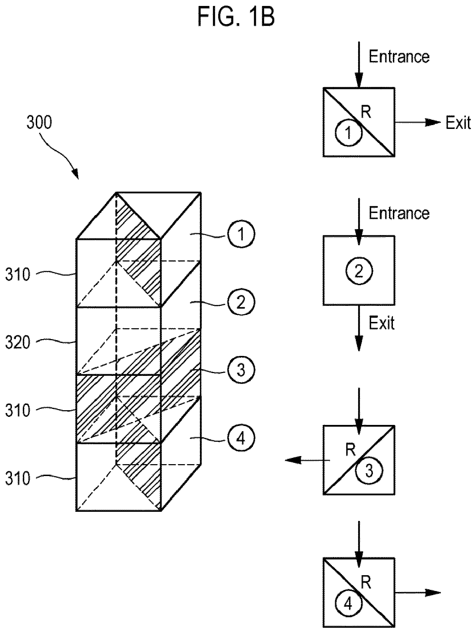

FIG. 1B illustrates a prism block 300 for reflecting an input image through a plurality of paths, according to a conventional method. Referring to FIG. 1B, the prism block includes a plurality of blocks 310 and 320 stacked on each other. However, in this case, the image qualities at the upper and lower interfaces of the stacked blocks may deteriorate, and such deterioration in image qualities is a factor in reducing the reliability of inspection.

[Prior Art Document] KR Patent No. 10-1233816

### SUMMARY

In order to solve the aforementioned problems, a prism (beam splitter) is required that can ensure that the decrease in the intensities of light beams separated from each other through a plurality of paths is not substantial and that can prevent a deterioration in image qualities caused by interfaces.

According to one embodiment of the present invention, an optical image detecting apparatus includes a prism structure that includes a first right-angled prism and a second right-angled prism configured to be in contact with each other to form a first interface for transmitting and reflecting an image input from the outside, wherein the second right-angled prism includes at least two right-angled sub-prisms configured to be in contact with each other to form a second interface.

In the optical image detecting apparatus, the first interface may have a transmittance of 50% and a reflectivity of 50%.

In the optical image detecting apparatus, the second interface may have a reflectivity of 100%.

In the optical image detecting apparatus, the second right-angled prism may be located to allow an image transmitted through the first interface to be input to the second right-angled prism.

The optical image detecting apparatus may further include a first image sensor configured to obtain an image transmitted through the first interface, a second image sensor configured to obtain an image reflected by the first interface, and a third image sensor configured to obtain an image transmitted through the first interface and reflected by the second interface.

The optical image detecting apparatus may further include a plurality of additional prism structures, each of which includes a third right-angled prism and a fourth right-angled prism configured to be in contact with each other to form a third interface for receiving an image output from the prism structure and transmitting and reflecting the received image, wherein the fourth right-angled prism includes at least two right-angled sub-prisms configured to be in contact with each other to form a fourth interface.

In the optical image detecting apparatus, the images output from the prism structure may include an image transmitted through the first interface, an image reflected by the first interface, and an image transmitted through the first interface and reflected by the second interface, and the plurality of additional prism structures may be configured to receive the three images, respectively.

The optical image detecting apparatus may further include a plurality of image sensors configured to obtain each image output from the plurality of additional prism structures.

The optical image detecting apparatus, according to an embodiment of the present invention, is advantageous in that the brightness of an image is reduced to about one-half, rather than one-third as in the conventional technology, thereby minimizing a loss of the brightness, and since the image is not input to stacked blocks, an error caused by stacked portions may not be generated.

### BRIEF DESCRIPTION OF THE DRAWINGS

FIG. 1A is a schematic view illustrating a method in which 3CCD or 3CMOS type image sensors, according to the related art, receive respective color images.
FIG. 1B illustrates a prism block for reflecting an input image to a plurality of paths, according to the related art.
FIGS. 2A and 2B are schematic views of an optical image detecting apparatus according to one embodiment of the present invention.
FIG. 3 is a schematic view of an optical image detecting apparatus according to one embodiment of the present invention.
FIGS. 4A and 4B are views illustrating arrangements of image sensors of an optical image detecting apparatus according to one embodiment of the present invention.

### DETAILED DESCRIPTION

The terms used in the present specification are only used to describe specific embodiments, and are not intended to limit the present invention. Singular forms are intended to include plural forms unless the context clearly indicates otherwise. In the present specification, the terms such as "include" and/or "have" may be construed to denote a certain characteristic, number, step, operation, constituent element, component or a combination thereof, but should not be construed to exclude the existence or a possibility of the addition of one or more other characteristics, numbers, steps, operations, constituent elements, components or combinations thereof.

Unless defined otherwise, all terms used herein, including technical and scientific terms, have the same meaning as commonly understood by those of ordinary skill in the art to which the present invention pertains. Terms such as those defined in a generally used dictionary are to be interpreted to have meanings consistent with the contextual meanings in the relevant field of art, and are not to be interpreted to have ideal or excessively formal meanings unless clearly defined in the present specification. Identical reference numerals disclosed in the drawings represent identical members. In describing embodiments, detailed descriptions related to well-known functions or configurations will be omitted when they are deemed to unnecessarily obscure the subject matters of the present invention. In the drawings, the sizes of elements may be exaggerated for description and do not mean the actual sizes.

Hereinafter, embodiments of the present invention will be described in detail with reference to the drawings.

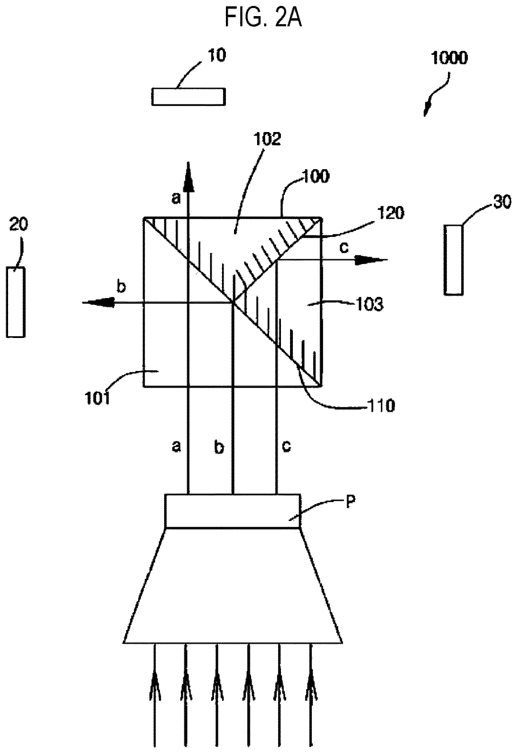

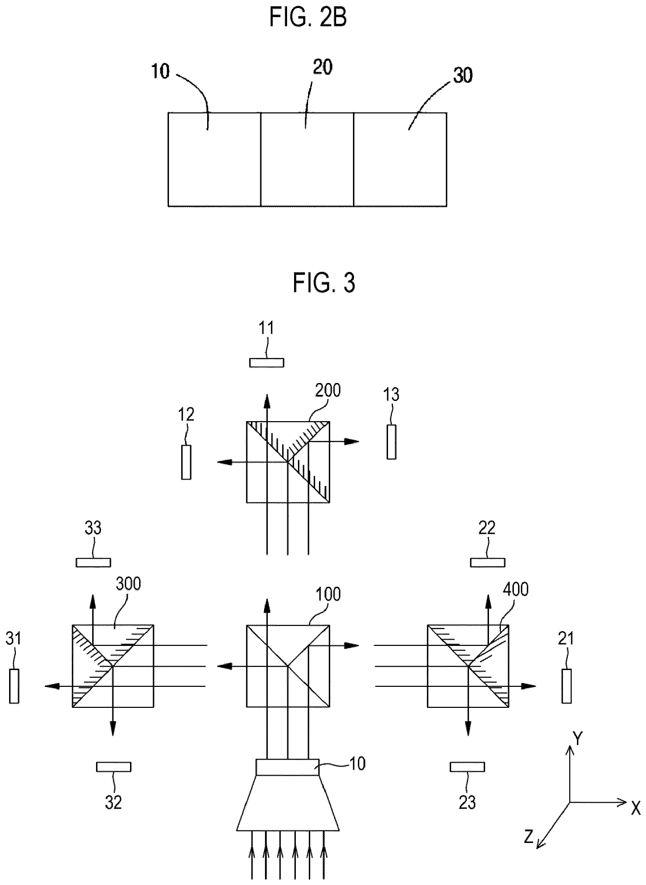

FIGS. 2A and 2B are schematic views of an optical image detecting apparatus 1000 according to one embodiment of the present invention. Referring to FIG. 2A, in order to transmit and reflect an image input from the outside, the optical image detecting apparatus 1000 includes a prism structure 100 that includes a first right-angled prism 101 and a second right-angled prism 102 and 103 that are in contact with each other to form a first interface 110, and the second right-angled prism 102 and 103 includes at least two right-angled sub-prisms 102 and 103 that are in contact with each other to form a second interface 120.

In one embodiment, the first right-angled prism 101 and the second right-angled prism 102 and 103 constituting the prism structure 100 may be right-angled prisms extending in one direction, and the prism structure 100 may have a hexahedron shape. The lengths of the right-angled prisms may be determined according to the area of an image.

In one embodiment, an image input to the prism structure 100 of the present invention from the outside P may be split to travel along three paths a, b, and c, as illustrated in FIG. 2A. These three paths may be implemented by the first and second interfaces 110 and 120 formed in the prism structure.

The second right-angled prism may be formed with the two right-angled sub-prisms 102 and 103 adjoining each other, as illustrated in FIG. 2A. Accordingly, the second right-angled prism may be located on the back side of the first interface 110, as illustrated in FIG. 2A, such that an image passing through the first interface 110 is input to the second right-angled prism.

In one embodiment, the transmittance and reflectivity of the first and second interfaces 110 and 120 may be set to predetermined rates. For example, the transmittance and reflectivity of the first interface 110 may be set to about 50% and are preferably required to be set to exactly 50%. The reflectivity of the second interface 120 may be set to about 100% and may be preferably set to exactly 100%.

The first interface 110 may receive an input image to transmit a part of the received image in the entrance direction (a) and (c) and to reflect a different part of the received image in a direction (b) different from the entrance direction, as illustrated in FIG. 2A.

A part (a) of the image transmitted through the first interface 110 may be output to the outside of the prism structure 100 through the right-angled sub-prism 102, and a different part (c) may be reflected by the second interface 120 and output to the outside of the prism structure after transmission through the right-angled sub-prism 103.

In another embodiment, the optical image detecting apparatus 1000 may further include a first image sensor 10 that obtains the image transmitted through the first interface 110; a second image sensor 20 that obtains the image reflected by the first interface 110; and a third image sensor 30 that obtains the image transmitted through the first interface 110 and reflected by the second interface 120.

Specifically, the first image sensor 10 may obtain the image traveling along the path (a) in FIG. 2A, the second image sensor 20 may obtain the image traveling along the path (b), and the third image sensor 30 may obtain the image traveling along the path (c). The brightness of each image may be reduced to about 50% since the image is transmitted through the first interface 110 having a transmittance of 50%.

That is, the second interface 120 receives a part of the image input to the first interface 110. In order to implement the above-described paths a, b, and c, the second interface 120 may be formed to be perpendicular to the central portion of the first interface 110, as illustrated in FIG. 2A.

These image sensors may be arranged in series, as illustrated in FIG. 2B. In this case, a captured image (i.e., the field of view (FOV) of a camera) may be represented as illustrated in FIG. 2B.

FIG. 3 is a schematic view of an optical image detecting apparatus according to one embodiment of the present invention. Referring to FIG. 3, the optical image detecting apparatus further includes a plurality of additional prism structures 200, 300, and 400, in addition to the prism structure 100 described above with reference to FIG. 2A.

Each of the additional prism structures 200, 300, and 400 may receive an image output from the prism structure 100 to perform the same functions as those of the prism structure 100. The same functions include a function of splitting incident light into three light beams and outputting the same through three paths.

In one embodiment, each of the additional prism structures 200, 300, and 400 may have the same structure as that of the prism structure 100. That is, in order to transmit and reflect an input image, each additional prism structure may include two right-angled prisms in contact with each other to form a third interface, and among the two right-angled prisms, the right-angled prism located on the back side of the third interface with respect to the entrance direction may be configured with two right-angled sub-prisms that are in contact with each other to form a fourth interface.

In other words, an image output from the prism structure 100 may include the following three images: an image transmitted through the first interface ((a) of FIG. 2A), an image reflected by the first interface ((b) of FIG. 2A), and an image transmitted through the first interface and reflected by the second interface ((c) of FIG. 2A). The plurality of additional prism structures above receives the three images, respectively.

In one embodiment, the fourth interface formed by the two right-angled sub-prisms may have a reflectivity of about 100%, and the third interface may have a transmittance of about 50% and a reflectivity of about 50%.

An image input from an external light source may be split into nine paths by the additional prism structures 200, 300, and 400, as illustrated in FIG. 3.

In one embodiment, the optical image detecting apparatus 1000 may include a plurality of image sensors 11, 12, 13, 21, 22, 23, 31, 32, and 33 for obtaining the images separated from each other.

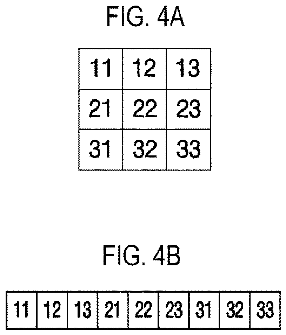

FIGS. 4A and 4B are views illustrating arrangements of the image sensors of the optical image detecting apparatus according to embodiments of the present invention. The plurality of image sensors illustrated in FIG. 3 may be arranged as illustrated in FIG. 4B. Further, the prism structure 100 of FIG. 3 may be rotated by a predetermined angle, and the positions of the additional prism structures may also be changed to correspond to that of the prism structure 100 according to the angle of rotation.

In a case of rotating the prism structure 100 by an angle of 90 degrees, the additional prism structures 300 and 400 may be moved to correspond to the prism structure 100. For example, in a case where the prism structure 100 disposed as illustrated in FIG. 3 rotates by an angle of 90 degrees in a first direction or a second direction, the image sensors may be arranged as illustrated in FIG. 4A, and captured images may also be represented as illustrated in FIG. 4A. Here, the first direction may be a direction in which the face of the prism structure 100 oriented in the direction of +x is rotated so as to be oriented in the direction of +z, and the second direction may be a direction in which the face of the prism structure 100 oriented in the direction of +y is rotated so as to be oriented in the direction of +z. This may allow a user to capture various images according to a desired image form or the size or shape of a subject to be measured.

As described above, the prism structure of the optical image detecting apparatus, according to an embodiment of the present invention, splits an input image using a prism that includes the first interface having a transmittance of about 50% and a reflectivity of about 50% and the second interface located on the back side of the first interface and having a reflectivity of about 100%. Accordingly, the optical image detecting apparatus is advantageous in that the brightness of the image is reduced to about one-half, rather than one-third as in the conventional technology, and since the image is not input to stacked blocks, an error caused by stacked portions may not be generated.

Although the embodiments of the present invention have been described above with reference to the accompanying drawings, it should be understood that these embodiments are given by way of illustration only, and that various modifications, variations, and alterations can be made by those skilled in the art. However, it should be understood that such modifications, variations, and alterations fall within the spirit and scope of the present invention. Thus, the technical scope of the present invention should be determined according to the attached claims.

### [Description of reference numerals]

100: prism structure, 200, 300, 400: additional prism structures, 101: first right-angled prism, 102, 103: second right-angled prism, 110: first interface, 120: second interface, 1000: optical image detecting apparatus

## Claims

1. An optical image detecting apparatus comprising a prism structure that comprises a first right-angled prism and a second right-angled prism configured to be in contact with each other to form a first interface for transmitting and reflecting an image input from the outside,
wherein the second right-angled prism comprises at least two right-angled sub-prisms configured to be in contact with each other to form a second interface.

2. The optical image detecting apparatus as claimed in claim 1, wherein the first interface has a transmittance of 50% and a reflectivity of 50%.

3. The optical image detecting apparatus as claimed in claim 1, wherein the second interface has a reflectivity of 100%.

4. The optical image detecting apparatus as claimed in claim 1, wherein the second right-angled prism is located to allow an image transmitted through the first interface to be input to the second right-angled prism.

5. The optical image detecting apparatus as claimed in claim 1, further comprising:
a first image sensor configured to obtain an image transmitted through the first interface;
a second image sensor configured to obtain an image reflected by the first interface; and
a third image sensor configured to obtain an image transmitted through the first interface and reflected by the second interface.

6. The optical image detecting apparatus as claimed in claim 1, further comprising:
a plurality of additional prism structures, each of which comprises a third right-angled prism and a fourth right-angled prism configured to be in contact with each other to form a third interface for receiving an image output from the prism structure and transmitting and reflecting the received image,
wherein the fourth right-angled prism comprises at least two right-angled sub-prisms configured to be in contact with each other to form a fourth interface.

7. The optical image detecting apparatus as claimed in claim 6, wherein the images output from the prism structure are an image transmitted through the first interface; an image reflected by the first interface; and an image transmitted through the first interface and reflected by the second interface, and the plurality of additional prism structures are configured to receive the three images, respectively.

8. The optical image detecting apparatus as claimed in claim 7, further comprising:
a plurality of image sensors configured to obtain each image output from the plurality of additional prism structures.
